Europäisches Patentamt

European Patent Office

Office européen des brevets

(11) Publication number: **0 212 288**
**A2**

# (12) EUROPEAN PATENT APPLICATION

(21) Application number: 86110007.1

(22) Date of filing: 21.07.86

(51) Int. Cl.⁴: **F16L 15/04 , E21B 17/042**

(30) Priority: 19.08.85 US 767355

(43) Date of publication of application:
04.03.87 Bulletin 87/10

(84) Designated Contracting States:
AT DE FR GB IT NL

(71) Applicant: RAULINS, George M.
12408 Veronica
Farmers Branch, TX 75234(US)

(72) Inventor: Raulins, George M.
12408 Veronica Road
Farmers Branch Texas 77234(US)
Inventor: Grimmer, George G.
3040 Erie Lane
Farmers Branch Texas 75234(US)

(74) Representative: Henkel, Feiler, Hänzel &
Partner
Möhlstrasse 37
D-8000 München 80(DE)

(54) Improved oilfield tubular joint and method of manufacturing.

(57) A coupling-type threaded connection is provided for oilfield tubular goods. Premium threads are machined on standard API upset pipe, thereby providing the strength and sealing reliability necessary for many oilfield operations while minimizing manufacturing costs and increasing product availability. Either a two-step thread design with a torque and seal shoulder or a tapered run-out thread may be provided. A corrosion protection ring may be employed regardless of whether the pin end is coated or uncoated. The coupling-type connection may be easily provided with various optional features, and the threads may be cut on new or previously threaded API upset pipe. The method of manufacturing significantly lowers unit cost compared to other premium thread tubular joints having full strength.

# IMPROVED OILFIELD TUBULAR JOINT AND METHOD OF MANUFACTURING

## BACKGROUND OF THE INVENTION

The present invention relates to improvements in the threaded connections for oilfield tubular goods having premium threads, and particularly relates to coupling-type premium thread connections for tubing and casing.

The American Petroleum Institute (API) has established standards for threaded tubular oilfield products commonly called Oil Country Tubular Goods (OCTG), such as oilfield casing, tubing, drill pipe, and line pipe. Since drill pipe is used for drilling the well, API standards require certain metallurgical and strength requirements to satisfy anticipated tensile, torsional, and cyclic loads. Line pipe is primarily used for containing flowing oil and gas production on the surface, and generally has less stringent standards. Tubing and casing are utilized in the well during the production life of the formation, and API specifications for tubing and casing therefore relate to the anticipated uses for these products. As previously mentioned, the present invention particularly relates to connections for oilfield tubing and casing, having a diameter or nominal size of from 1-1/2" to 4-1/2".

Tubing and casing meeting API specifications is readily available at a relatively low cost, in part because many companies manufacture API tubing and casing and such products are interchangeable with products manufactured by other companies. API thread specifications are relatively easy to satisfy since thread profiles, tapers, and leads do not have extremely close tolerances, and since no metal-to-metal shoulders or seals are utilized. API specifications allow for External Upset Ends (EUE), and because for the low cost of upsetting and threading per API specifications, this connection is a popular tubing used to complete oil and gas wells. Further details regarding tubular goods manufactured according to API specification may be found at page 39 of the publication World Oil's 1985 Tubing and Casing Joint Tables , which is hereby incorporated by reference.

The thread profiles approved by API are either of a round type or a buttress type. A seal is provided through high metal-to-metal bearing contacts on certain engaged surfaces of the threads and a filler material trapped in the void areas of the threads. The seals provided by API threads are not, however, generally acceptable for high pressure oilfield environments. Even the resilient seal recently adopted by API to increase the sealing ability of the threads does not provide the acceptability as metal-to-metal seals found in premium threads.

As wells are drilled deeper and encounter higher pressures, temperatures, and more corrosive fluids, the disadvantages of API connections limit their use in the petroleum recovery industry.

A major disadvantage of API threaded connections is that such connections do not generally have the qualities equaling the pipe body in relation to tensile strength, sealing capabilities, or torque transmission. (Tubular goods having such qualities are commonly referred to as "full strength" or "full pipe body strentth" products). Some API designs, such as Extreme line casing connections, develop physical properties approaching that of the pipe body, but because of the high cost of upsetting the pipe and the subsequent high machining costs, this connection has not been widely accepted or utilized in the oilfield. In another attempt to increase the connection strength and bearing loads for API threaded tubing and casing, a tapered engagement for thread surfaces has been utilized. In this embodiment, the loads developed under high torque unfortunately also cause high hoop stresses in the connection, thereby increasing its susceptibility to failure, especially in wells having corrosive fluid such as hydrogen sulfide. It may therefore be seen that although API connections for tubing and casing have long been used in oilfield operations, their use is diminishing over recent years because of disadvantages in strength in API threads, primarily relating to less than full strength connections.

Premium thread connections were developed to overcome the disadvantages of API threads, and many types of premium threads from various manufacturers have been widely accepted and are generally available in the market. Although each type of premium thread probably has certain advantages and disadvantages over other types of threads, most premium threads include metal-to-metal seals (apart from the threaded surfaces), at least one circular torque shoulder, and offer significantly higher resistance to failure by various corrosive media and conditions than API connections. In general, the metal-to-metal seals of premium threads are capable of withstanding internal or external pressure differentials equal to the rating of the pipe body. The strength of premium thread connections in tension, bending, burst, and collapse are also generally equal to that of the pipe body, so that many different types of connections with premium threads meet the "full strength" standard. Hydril, Atlas-Bradford, and Armco are three of the many manufacturers of premium threads, and various embodiments are available in single or two-step thread designs, with straight threads, tapered threads, or hooked threads, each available in a different buttress or a modified buttress thread profile. Connections with premium threads may have metal-to-metal seals in the pin flank area, in an intermediate shoulder, an external seal at the end of the box, or any combination thereof. Many premium threaded connections also have one or more elastomeric ring seals at various locations within the connection. Further details regarding commercially available premium threads for tubing and casing are disclosed in World Oil's 1985 Tubing and Casing Joint Tables commencing on page 40, which publication is hereby incorporated by reference.

From the above, it should be understood that a significant disadvantage of premium threads is that premium threads from various manufacturers have markedly different properties, and threaded tubing and casing of the same nominal size from such various manufacturers is thus not interchangeable. Also, although various manufacturers may represent that certain of their products are designed to be interchangeable with certain other manufacturers' products, each manufacturer generally treats their specific threads, and the tolerances and dimension relating thereto, as proprietary and confidential, so that oilfield operators generally recognize that some risks are inherently assumed when interchanging products with similar thread configurations from various manufacturers. Accordingly, each of the various premium thread designs are generally available on a much more restricted basis, with significantly longer lead times, than API threaded connections.

A second significant disadvantage of premium threads is that either or both the pin or the box end of the pipe are formed utilizing an expensive hot-forging upset process. API upset pipe generally has an upset wall thickness of approximately 50% more than the wall thickness of the pipe, while each end of premium thread pipe typically has a wall thickness of at least 200%, and generally in the range of from 250%-300%, of the wall thickness of the pipe body. Because of the large difference in wall thickness between the heavy upset ends and the non-upset pipe body, uniform heat treating of the tube becomes more difficult, requiring more precise and expensive equipment. Threads cut on such a heavy upset pipe also are very expensive to machine since so much of the upset material must be cut away before the threads can be applied. Only a fraction of the manufacturing facilities capable of upsetting and subsequently heat treating API-threaded pipe are also equipped to produce the more demanding upset required for premium thread pipe. Accordingly, upset pipe with premium threads is significantly more expensive and not as readily available as API upset pipe.

The majority of API connections for tubing and casing are threaded with a pin (male connection) at each end of the pipe, with the ends connected by a coupling. One exception to this general rule is the API Extremeline casing mentioned earlier. The majority of premium threads, on the other hand, are formed of an integral joint design, with a pin on one end and a box or female thread on the other end. A variant of the above generalization is the VAM threads manufactured by Vallourec, wherein a premium thread is cut on the pin end of a non-upset pipe, and pipe ends are joined together by a coupling. VAM threads generally have some advantages common to other premium threads, but at a reduced cost because non-upset pipe is utilized and machining costs are accordingly lower. VAM threads also have significant disadvantages, however, including arguably less than full pipe body strength and a tendency for thin shoulders to fail under high torque.

In addition to significantly increased costs and reduced availability, premium threads generally have one or more of the following disadvantages:

(A) The bottom shoulder connection is not adaptable to an epoxy coating. Many production strings of tubing and casing are preferably coated on the inside with one or more commercially available epoxy coatings for use under corrosive conditions. Some premium thread connections are not capable of being coated in such a manner that all the uncoated portions are protected from the well fluids. An example of such a design is the Atlas-Bradford IJ-4S or VAM designs including a bottom shouldered joint. If the bottom shoulder of the joint were coated, the coating on the engaged portion would likely chip or break off when the torqued connection is made, thereby permitting accelerated corrosion at that point. Examples of fully coatable tubing, on the other hand, are the Atlas-Bradford DSS-HTC and the Hydril CS-CB designs. In an attempt to provide a joint which, although not normally coated, may be coated for particular applications, some manufacturers have provided premium thread joints capable of being modified for receiving the desired coating. Such special modifications, however, obviously add to the increased cost for such joints.

(B) Some premium threads suffer from a fragile shoulder. In the case of the non-upset VAM connections referred to earlier as well as some other premium thread designs, the portion of the pipe body wall required for the threads, taper, and seal, leave very little available wall thickness for use as a "stop". Also the "stop" shoulder for many premium thread joints is at the end of the pin or the box, resulting in a relatively thin shoulder. This condition causes the connection to be very fragile, and the string of casing or tubing is thus sensitive to moderate overtorquing and mishandling.

(C) Other premium threads provide a relatively fragile metal-to-metal seal design. A seal that extends to the very bottom of the pipe joint is susceptible to damage during pipe handling or misstabbing of the joint. Accordingly, such pipe must be more carefully handled, and extra precautions taken to insure that damaged seals are not incorporated into the string.

(D) Pipe with premium threaded connections is generally for specialized use, and thus requires the user or his supplier to maintain either high inventories or accept long delivery times. It is frequently not known at the time a well is drilled whether API, high strength premium, or high strength and coatable premium pipe will be used to complete the well. Consequently, each type may be kept in inventory by either the drilling company or a pipe supplier, pipe inventory may be modified for accepting a corrosion-resistant coating, or pipe may be ordered when the need is determined. In any event, this increased inventory, rushed modification, and/or delays in completing the well can significantly increase the overall costs to the drilling company.

(E) Some premium threads, especially those with an integral joint connection, require that special handling equipment such as tongs and elevators be utilized for receiving abnormally-sized pipe. This obviously increases the cost of the drilling operation, and makes the operation more susceptible to delays since non-standard components must be repaired or replaced, and such components are not readily available.

It should be apparent that very few if any premium joints suffer from all of the disadvantages listed above, and in many cases such disadvantages are, to some extent, a matter of degree. Some manufacturers have attempted to solve some of the above-listed problems by more closely approximating the benefits of a premium connection while still utilizing multitaper API pipe threads. An example of this approach is the Multaper coupling manufactured and distributed by Landell Manufacturing, Inc. in Spring, Texas. As another variation, Hydril offers a tubing referred to as the A-95 tubing, which is described as a premium tubing connection in that premium threads are utilized, although the threads are cut on an upset greater than an API upset but less than many other premium thread upsets. The A-95 tubing is, however, not full strength, is not recommended for deep wells, and is more commonly applicable to non-demanding and relatively short tubing strings.

The disadvantages of the prior art are overcome by the present invention, and an improved threaded connection and method of manufacturing are hereinafter described for tubular goods commonly utilized in oilfield operations.

SUMMARY OF THE INVENTION

According to the present invention, a premium thread is provided on an API upset pipe, i.e., a pipe having an upset wall thickness less than 175%, and generally in the range of from 145% to 160%, of the nominal wall thickness of the pipe. API upset pipe is readily available throughout the world from various manufacturers, and is markedly less expensive than pipe upset for conventional premium thread connections. Although a premium connection according to the present invention may be produced at a much lower cost than other premium connections, the connection nevertheless benefits from features common to more expensive premium connections, namely the inclusion of metal-to-metal seals, connection strengths in tension, bending, burst and collapse equal to that of the pipe body, high torque transmissibility, and increased resistance to failure from corrosive fluids or conditions compared to API tubing and casing.

An improved threaded connection is provided suitable for oilfield tubular goods. The connection is of the coupling-type, wherein both ends of the pipe are threaded with a pin end, and a coupling is provided for connecting pipe ends. The pin ends of the pipe are formed utilizing an upset process commonly used for standard API pipe, wherein the wall thickness after upset is generally in the range of approximately 50% to 55% greater than the wall thickness of the pipe body. After the upset operation, premium threads are cut on the upset, and a sealing surface is formed for the metal-to-metal seal capable of withstanding pressures equal to or greater than the rating of the pipe body. The last engaging thread of the pin end with the coupling still maintains a wall thickness equal to or greater than the wall thickness of the pipe body. This feature, in combination with the relatively mild upset, enables the connection to have strengths in tension, bending, bursts and collapse equal to or greater than that of the pipe body. A connection according to the present invention may be used for both coated and non-coated connections, without any modifications to either the pin end of the pipe or the coupling. A corrosion barrier ring may be utilized to reduce corrosion and/or streamline flow through the pipe.

According to one embodiment of the present invention, two-step premium threads are cut on each end of API upset pipe lengths, which are thereafter joined together with a coupling. The connection retains full pipe body wall strength, although the cost of the connection is substantially reduced compared to generally available premium threads. A relatively thick intermediate torque shoulder is provided, with optional resilient backup seals. A corrosion barrier ring is utilized, and the same pipe may be coated or left uncoated. In order to reduce hoop stress, modified buttress threads may be utilized with negative load flanks. A flank seal surface is also provided, with the seal surface recessed from the extreme end of the pipe and thus generally protected from damage.

In addition to substantially reduced manufacturing costs, a significant advantage of the present invention is that tubing and casing suitable for oilfield usage is provided having the advantages of a premium thread, but with the availability of the product being significantly enhanced because standard API upsetting techniques are utilized to form the pin end of the pipe, and machining of the premium threads is facilitated because of this nominal API upset deformation. It is a further feature of the present invention to provide a premium thread design for machining on API upset pipe even after normal API threads have been cut on the pipe. In other words, according to the present invention existing inventory of API tubing and casing may be converted to premium thread tubing and casing by cutting premium threads on the existing pipe. Accordingly, pipe inventory may be substantially reduced, thus lowering overall oilfield costs, and standard and commercially available products may thus be converted to the higher quality product.

It is a feature of the present invention to provide a threaded connection for oilfield tubular goods which has a substantially reduced cost compared to conventional premium threaded connections.

It is a further feature of the present invention to provide a threaded connection which may be readily manufactured by mills, pipe processors, manufacturers of oilfield tools and equipment, and machine shops. Tubing and casing connections, according to the present invention, may thus be manufactured with conventional equipment readily available in geographical areas which do not have equipment necessary for manufacturing heavy upsets used for most premium threads.

Still another feature of the invention is to provide a relatively low cost premium thread connection utilizing several design concepts each individually proven and accepted in the oilfield industry.

It is another feature of the present invention to provide a connection which may be easily produced with a relatively short lead time compared to most premium threads. This reduction of lead time, in part, is possible because threads according to the present invention may be cut on existing API upset tubing and casing, or on tubing and casing which is already upset and threaded according to API specifications, although the threads may have been damaged.

It is a further feature of the present invention to provide an improved threaded connection on tubing upset according to API specifications, wherein the threaded connection employs a metal-to-metal seal independent of the threaded surfaces.

A further feature of the present invention is to provide a premium thread on tubing and casing upset according to API specifications, with the connection having strength equal to or greater than the strength of the tubing and casing body.

It is a further feature of the present invention to provide an improved connection for oilfield tubular goods, wherein readily available and relatively low cost tubing and casing having premium threads may be provided for wells at various depths and pressures, and may be utilized for both work string or completion string operations.

Still another feature of the present invention to provide an improved tubing and casing connection having premium threads which may be utilized with conventional oilfield equipment, including conventional elevators, slips, and tongs.

A further feature of the present invention is to provide an improved threaded connection formed on API upset pipe and including premium threads, with the connection adapted for receiving an optional corrosion barrier ring.

It is also a feature of the invention to provide an improved threaded connection formed on mildly upset pipe, with the connection having high torque carrying ability and low sensitivity to over torquing.

It is another feature of the invention to provide an improved method of manufacturing premium threads on oilfield tubular goods, wherein pin ends of such goods are upset according to API specifications, premium threads are cut on the API upset ends, and axially aligned pin ends are joined together by a coupling.

Finally, it is a feature of the present invention to provide methods and apparatus for forming an improved threaded connection for oilfield tubing and casing which may be uniformly and reliably utilized by various manufacturers, wherein tubing and casing manufactured according to the present invention may be uniformly utilized and interchanged with similar tubing and casing manufactured by others.

These and further features and advantages of the present invention will become apparent from the following detailed description, wherein reference is made to the figures in the accompanying drawings.

BRIEF DESCRIPTION OF THE DRAWINGS

Figure 1 is a pictorial view, partially in cross-section, of a suitable threaded connection according to the present invention.

Figure 2 is an expanded cross-sectional view of the last engaging thread of a coupling according to the present invention.

Figure 3 is an expanded cross-sectional view of a torque shoulder for a connection according to the present invention similar to that generally depicted in Figure 1.

Figure 4 is a pictorial view, partially in cross-section, of another embodiment of the present invention.

Figure 5 is an expanded cross-sectional view of the pin ends of the tubing and a corrosion barrier ring according to the present invention.

Figure 6 is a cross-sectional view of another embodiment of a torque shoulder according to the present invention.

Figure 7 is a cross-sectional view of an alternate embodiment of the torque shoulder seal shown in Figure 6.

DETAILED DESCRIPTION OF THE INVENTION

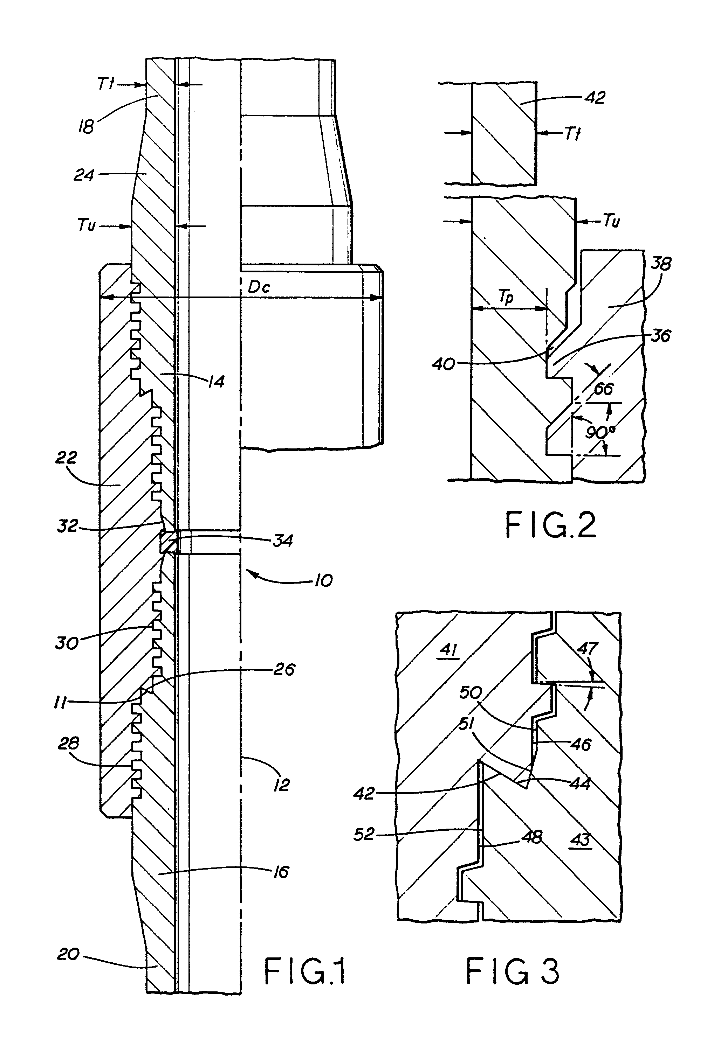

Figure 1 depicts a pictorial view of the threaded connection 10 according to the present invention. As is customary with depictions for threaded connections in the oilfield tubing and casing industry, a portion of the assembled product on one side of the centerline 12 is shown in cross-section, while the other side depicts the outer configuration of the assembly. In Figure 1, the pin ends 14 and 16 of tubing 18 and 20 are joined by coaxially. mating coupling 22. It should be understood that both pin ends of tubing 18 and 20 are identical, with each tubing having a nominal wall thickness Tt, and an upset wall thickness Tu. As will be explained hereafter, Tu according to the present invention generally coincides with the upset thickness for tubing and casing upset according to API specifications and, in general, Tu will be approximately 50% to 55% greater than Tt. The transition area between the tubing wall and the upset is shown at 24.

The members 18 and 20 are threadably engaged by right hand (or a left hand) rotation of each pin member with respect to the coupling 22. After a predetermined number of rotations, further rotation is prohibited by engagement of the intermediate shoulder 26 located between the threaded portions 28 and 30 which are stepped, i.e., cut at two dissimilar nominal diameters.

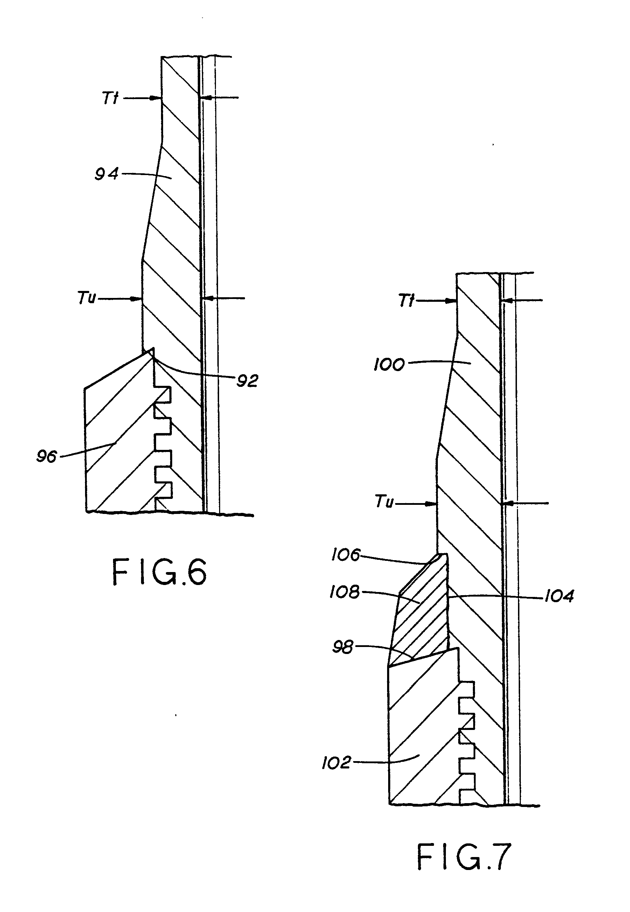

A metal-to-metal frustro-conical pin flank seal 32 is formed adjacent the end of each tubular member with the coupling 22. An outer conical surface of the pin end of the tubular member mates with an internal conical surface of the same or preferably a slightly different taper on the coupling 22, while at the same time the intermediate torque shoulder 26 is similarly formed between the pin end and the coupling. Engagement of the surfaces at 26 and 32 properly positions each pin end with respect to the coupling 22, and with respect to the resilient ring member 34. Ring member 34 is trapped between the ends of tubing 18 and 20, and may be formed from any number of suitable pliable materials such as commercially available Teflon compounds. Corrosion barrier ring member 34 fills the gap between adjacent pin ends, thereby providing a more smooth and streamline internal bore for the fluid. Also, the end of each pin member may be coated with a suitable epoxy material, as shown in Figure 5, and ring 34 seals against this corrosion resistant coating on the end of each pin and protects the non-coated surfaces inside the coupling from well effluents. Ring member 34 may also provide an additional seal against fluid pressure internal of the tubing under low fluid pressure.

A significant advantage of the embodiment shown in Figure 1 relates to the location of the stop shoulder 11, which allows for increased strength to be developed between the pin threads 28 and 30 and the corresponding coupling threads, so that the connection has full pipe body strength in that the strength of the connection is equal to or greater than the strength of the tubing having thickness Tt.

The strength of a threaded connection may generally be defined as the unit strength of the tubular material remaining between the last engaged thread of the coupling and the internal diameter of the pin end. This material area theoretically must carry the entire load being transmitted through the connection, since the area under (or over) each successive thread will carry correspondingly less load than that immediately preceeding it as each thread transmits a part of the load to the mating piece. Referring now to Figure 2, there is depicted the last engaging thread 36 of coupling 38 with the thread recess 40 cut in the API upset end of tubing 42. It should be noted that the thickness of Tp in the pin between the inner wall of the tubing and the base of the machined thread 40 is greater, and preferably in the range of from 10% to 50% greater, than the thickness Tt of the tubing 42. Accordingly, the area of the pin end adjacent the last engaged thread 36 is greater than the corresponding area of the tubing on which the upset was formed, although the tubing has only been upset by the amount required according to API specifications.

By locating the shoulder 26 between the two threads 28 and 30, the area dependent upon the Tp dimension may be maximized compared, for example, to an embodiment wherein the torque shoulder is located at each end of the coupling 22. Thus, the embodiment as shown in Figure 1 has increased strength over an embodiment with an external torque shoulder, such as that utilized in the Hydril PH-6 premium thread tubing connection.

Further details regarding a suitable torque shoulder according to the present invention are shown in Figure 3. The torque shoulder may be described as a "reverse angle" torque shoulder in that the torque interconnection results in a radially inwardly directed force on the pin end of the tubing from the coupling. As shown in Figure 3, the 30° angled surface 42 of the coupling 41 is adapted for metal-to-metal engagement with correspondingly angled surface 44 of the pin end 43 (alternatively, angle surface 44 may be slightly less than 30°). In some respects, the intermediate frustro-conical torque shoulder of the present invention may be similar to the intermediate torque shoulder utilized in the Hydril MAC casing connection or the Hydril SuPreme LX casing connection.

The outer adjacent surfaces 46 and 48 of the coupling and the adjacent inner surfaces 50 and 52 of the pin are preferably aligned with the axis of the pipe, so that no forced engagement of these surfaces is anticipated. In the embodiment shown in Figure 1, similarly aligned surfaces extend to the shoulder 26, so that the function of this shoulder 26 is primarily a stop for the torquing action, although surface 26 also serves as a metal-to-metal seal to either external or internal pressure due to the high loads imposed on the surfaces forming this seal. As shown in the embodiment depicted in Figure 3, the aligned surfaces 46 and 50 toward the pin end of the connection relative to surfaces 42 and 44 terminate before reaching the shoulder, and a seal shoulder 51 is formed by the engagement of slightly tapered or conical surfaces on the pin and coupling. Thus, while shoulder 26 in Figure 1 is a torque and sealing shoulder, the shoulder in Figure 3 offers still another metal-to-metal seal. The metal-to-metal seal 51 formed adjacent this shoulder may thus either be a secondary or back-up seal to a primary metal-to-metal seal, or may be primary metal-to-metal seal.

As a further feature of the embodiment shown in Figure 1, it should be understood that the outside diameter Dc as shown in Figure 1 may be made the same as an API coupling diameter in order to eliminate the need for any special handling equipment or special dies for assembling such equipment. The outer diameter Dc of the coupling may also be reduced to a diameter smaller than API specifications, if desired, to increase the running clearance between adjacent lengths of tubing, which would be particularly advantageous in situations wherein a casing contains two or more strings of tubing. In either event, however, the strength or performance of the connection need not be reduced in order to achieve the desired feature.

It should thus be understood that a coupling may be used for the embodiment depicted in Figure 1 which has an outer diameter corresponding to a conventional premium thread integral joint, which would be less than the diameter of an API coupling. The earlier discussion relating to connection strength and the full strength feature of the present invention dealt with the strength of the pin at the location of the last engaging thread. Similarly, the connection strength is related to the strength of the coupling in the area of the thread closest to the interconnection of the pin ends. In general, however, it is the material strength of the pin ends of a coupling-type threaded connection that is controlling of the connection strength, rather than the strength of the coupling. This is true because the coupling diameter may be increased to add strength without significantly increasing the connection costs, while a similar increase in the wall of the pin end generally results in a more drastic increase in cost. As previously mentioned, however, the coupling OD according to the present invention is preferably the same as API couplings, so that special handling equipment need not be required.

Referring again to Figure 5, the connection shown in Figure 1 may incorporate an epoxy coating 54 on each end of the pin as previously discussed. The Teflon ring 56 has an inner face 58 substantially coplanar with the interior diameter of the tubing in order to streamline fluid flow through the tubing. The shank sealing surface 59 of the pin is adapted for metal-to-metal engagement with a corresponding surface 61 of the coupling, forming shank seal 60. Seal 60 terminates prior to the extreme end of the pin portion, and is recessed from the end 62 by relief section 64, so that minor damage to the pin may occur without damaging the metal-to-metal surface seal 60. The shank seal of the present invention may form a metal-to-metal seal with the coupling similar to the pin-to-box seal shown in the Hydril MAC casing connection or the Hydril SuPreme LX casing connection referenced earlier.

As a further feature of the present invention, the end of the coupling generally made up at the threading plant prior to shipment to the wellsite (the shop end of the coupling) may be locked together to the pin end with a sealing and locking compound applied to the thread before the make up operation. This procedure provides an additional seal for added insurance against inadvertant break out or over-torque in the field. Nevertheless. this shop end connection may be disassembled, if desired, by a very high torque, or by the application of heat depending upon the particular compound used for the sealing and locking operation.

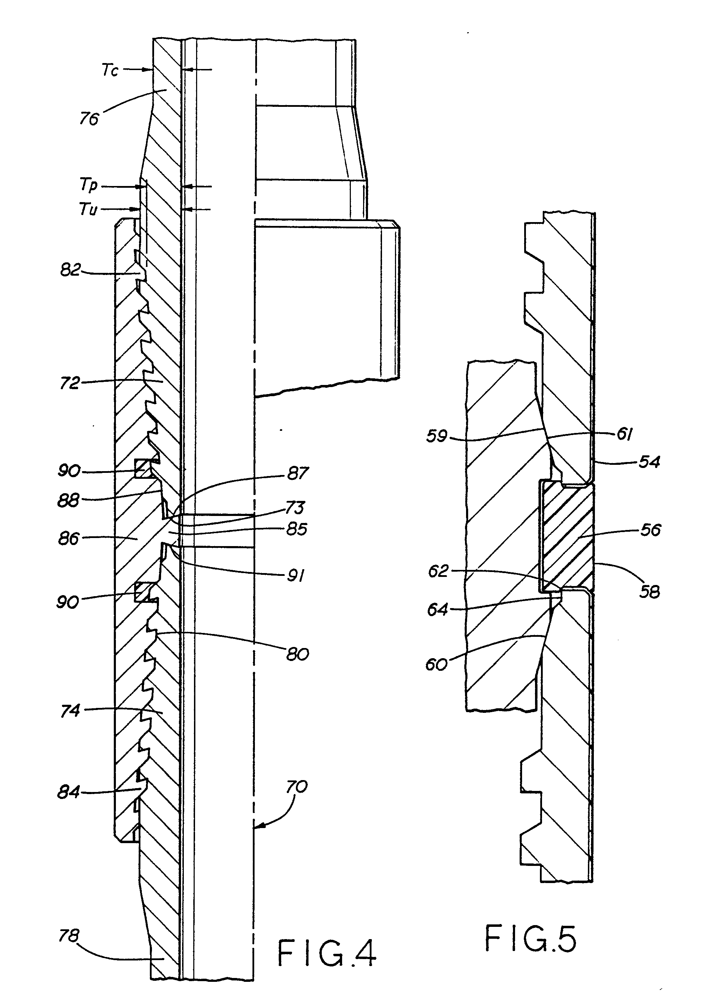

It should be understood that the present invention is adaptable to various premium thread designs, including non-tapered or "straight" premium threads, threads having no buttress on the engaging flank (thread flank surface perpendicular to the central axis of the connection), buttress or modified buttress thread profiles, or threads having a modified buttress with reverse load angle on the engaging flanks of each thread. Non-tapered or "straight" premium threads are shown in Figure 1, with the tip and base of the threads being substantially parallel with the pipe axis, and the flanks of the thread being perpendicular to the pipe axis. Threads with a similar 0° load flank are shown in Figure 2, with the non-load flank generally formed at angle 66, typically 15°-45°. Buttress threads are shown in Figure 3, wherein the load flank is at angle 47 of generally between 0° and 3°. A thread design similar to that shown in Figure 3 is the MAC casing connection offered by Hydril. Buttress threads with a reverse load angle on the engaging flanks are shown in Figure 4. As previously mentioned, buttress historically suffer from the disadvantage in that they produce increased hoop stresses in the connection. This disadvantage is minimized in a connection with a 0° angle on the engaging flanks of the thread, as shown in Figure 2. An advantage of the modified buttress threads with a reverse load angle as shown in Figure 4 is that a force is provided to reduce hoop stresses, which force further provides a resistance to prevent "jump out" of the threads.

From the foregoing, it should be apparent that a reliable premium thread joint may be inexpensively made according to the present invention utilizing readily available new or used API upset pipe. A "premium joint" as used herein means a threaded connection with one or more metal-to-metal seals which are circular in configuration - (rather than being spiral), with each seal lying substantially in a plane perpendicular to the axis of the pipe. A metal-to-metal seal, as used herein, is thus distinct from the low pressure spiral shaped seal formed by API threads. A "premium joint" also includes a torque shoulder that stops further engagement of the threads once the metal-to-metal seal or seals are positioned in proper relationship, and absorbs all torque above that required for obtaining such a seal. The torque shoulder may or may not serve as a metal-to-metal seal itself. Generally, premium threads utilize a thread profile with a low load flank engaging angle, i.e., from -20° to +10° with respect to the axis of the pipe, and are capable of full pipe body strength. Each of these features is therefore present in the low cost premium thread joint according to the present invention.

Figure 4 shows another embodiment of the present invention with the reverse load mentioned above provided on the pin ends 72 and 74 of tubing 76 and 78, respectively. The premium threads 80 as shown in Figure 4 are of the "run out" type, meaning that the threads run out onto the outer surface of the API upset end of the pipe having a wall thickness Tu. The last engaging threads 82 and 84 of the coupling 86 each respectively fit within a corresponding thread cut in the upset end, with the base of the cut out thread producing a thickness Tp equal to or greater than the thickness Tp as previously mentioned. This run out type thread is preferable according to the present invention in embodiments which include a metal-to-metal torque seal at the ends of the pin members. As with the embodiment previously described, greater than pipe body strength may be developed for the threaded connection.

In the embodiment depicted in Figure 4, end surfaces 73 at the pin ends of 72 and 74 mate with exterior surfaces 87 of center portion 85 of coupling 86. Engagement of the surfaces 73 and 87 form metal-to-metal sealing shoulders 91 which govern the proper relationship of each pin end to the coupling 86. As an option, a pair of resilient seal rings 90 in each end of the coupling may also be used to effect a back up seal. The embodiment as shown in Figure 4 may also include other optional features as previously described with respect to Figure 1. A disadvantage of the embodiment shown in Figure 4 compared to the embodiment shown in Figure 1 is that Figure 4 may not be reliably coated since any coating on end surfaces 73 would likely chip during make-up operations.

Referring now to Figure 6, it is possible to include a torque shoulder 92 on the outside of the connection using the API upset according to the present invention. In some cases, this outside torque shoulder is desirable, although it is difficult to obtain a "heavy" stop shoulder or torque shoulder with desired thickness because of the limited wall of API upset tubing. The embodiment as shown in Figure 6 wherein an outside torque shoulder is formed on the API upset end of tubing 94 and the ends of connector 96 is thus not preferable.

One technique for providing a desirable "heavy" shoulder on the outside of a connection is shown in Figure 7, wherein a very heavy torque shoulder 98 is formed between tubing 100 and coupling 102. In accordance with the present invention, the thickness Tu of the upset end of the tubing corresponds to API specifications. On the upset above the last thread, a planar surface 104 is machined with a positive stop end 106. The surface 104 may be serrated, and a ring member 108 manufactured with an ID slightly smaller than the diameter of surface 104. The interior surface of ring member 108 preferably is also serrated. Ring member 108 may then be heated sufficiently to cause the ring member to expand so that it may be slipped over the surface 104 and against the stop shoulder 106. Once the ring member cools, the member 106 is firmly attached to the API upset end of the tubing 100. After further cooling, a surface may be machined on the end of 108 to mate with the end of coupling 102, thereby providing a "heavy" shoulder 98.

It should thus be understood that the present invention has a significant advantage over the prior art in that relatively low cost premium threads may be manufactured by various companies involved in oilfield operations, since the threads are cut on API upset pipe rather than the significantly more elaborate equipment necessary to form wall thickness two or three times the thickness of the pipe for most premium threads. Localities without the ready availability of forming premium upset operations may therefore nevertheless obtain premium threads by cutting such threads from standard API pipe. The cost and lead time required to obtain products manufactured according to the present invention is thus reduced, and correspondingly the necessary inventory may be reduced, especially since threads according to the present invention may be cut on pipe previously threaded to API specifications, or on pipe which has damaged threads.

A second major feature of the present invention relates to the design of the threaded connection and the versatility obtained by that design. As previously noted, the same products according to the present invention are utilized regardless of whether the user desires a coated or a non-coated pin end; the pin end may be coated by any number of manufacturers without any modifications to the connection. A non-fragile torque shoulder may be provided, and no special tooling is necessary when handling thread to pipe. Nevertheless, high quality metal-to-metal seals are obtained, so that the threaded connection of the present invention has substantially increased strength over API threaded connections and may easily be manufactured according to the present invention so that the connection has the same or a greater strength than the tubing or casing itself. In part, the strength of the connection and its reliability are due to the fact that sophisticated upsetting and heat treating techniques of the pin ends are not required, since the relatively nominal upset according to API specifications can be easily and reliably performed by many manufacturers. Also, any tubing and casing material, including special alloys for wells with highly corrosive fluids, which can be upset with API upsets can therefore be readily used for obtaining low cost premium threads according to the present invention.

The corrosion protection ring for use between the pin end of tubing joined together by a coupling is a significant feature of the present invention. The corrosion protection ring provides corrosion protection for the seals, a barrier prohibits well effluents from contacting the coupling, and allows for a crevice-free, smooth internal bore for erosion protection.

Although several modifications of the invention have been discussed, such as those relating to the selected thread profile and the use of a torque shoulder or a combined torque and seal shoulder, many other modifications to the present invention are within the scope of the invention. For instance, in the embodiment with the intermediate torque shoulder, the angle of the torque shoulder certainly need not be 30°, and in certain cases a torque shoulder perpendicular to the pipe axis may be provided. Similarly, the number of threads per inch and the length of the threaded end may be varied according to the requirements for particular operations.

The present invention is applicable to oilfield tubing and casing having a nominal size of between 1" to 4-1/2". As sizes increase above 4-1/2", tubular products for the oilfield generally tend to be of the integral joint pin-box configuration or the non-upset variety. Also, drill pipe and line pipe have differing requirements than tubing and casing. Nevertheless, the principles of the invention are also applicable to other types of OCTG products, and certain concepts of the present invention are applicable to both API upset goods and non-upset goods or goods upset at variance with API specifications. It should therefore be understood that the specific embodiments disclosed herein should not be construed as limitations on the present invention, and those skilled in the art will appreciate that various other modifications and features may be made without departing from the spirit and scope of the present invention.

## Claims

1. A threaded connection for coaxially joining lengths of metallic oilfield tubular members having a generally uniform wall thickness, each of said tubular members having a threaded pin member at each end of said lengths. and a threaded coupling for connecting said pin members, the improvement comprising:

each of said pin members including an upset wall having a thickness less than 175% of said uniform wall thickness;

each of said pin members having a premium thread cut on an outer surface of said upset wall and a sealing surface independent of said premium threads for forming a metal-to-metal seal with said coupling;

said coupling having a mating premium thread cut on its inner surface and a mating metal-to-metal sealing surface;

each of said pin members and said coupling further having a torque shoulder independent of said premium threads for prohibiting further rotation between a pin member and said coupling when said metal-to-metal seal is formed; and

the wall thickness between an internal radius of said upset wall and a base of a groove forming the last thread on each of said pin members in threaded engagement with said coupling is greater than said uniform wall thickness, whereby the strength of said connection is equal to or greater than the strength of said tubular lengths.

2. A threaded connection as defined in Claim 1, wherein:

each of said premium threads on said pin members and said coupling are two step threads, with a first threaded portion axially spaced from a second threaded portion and having a substantially different diameter than said first threaded portion; and

each of said pin members and said coupling including a torque shoulder surface axially disposed between said first and second thread portions for forming said torque shoulder.

3. A threaded connection as defined in Claim 1, wherein:

said premium threads of said coupling run out onto said outer wall of said upset pin members.

4. A threaded connection as defined in Claim 1, further comprising:

an elastomeric corrosion ring sandwiched between adjacent end surfaces of said pin members for sealing said coupling from well effluents.

5. A threaded connection as defined in Claim 1, wherein an internal diameter of said tubular goods corresponds to an internal diameter of said upset wall.

6. A threaded connection as defined in Claim 1, wherein said upset wall thickness is from approximately 140% to 160% of said uniform wall thickness.

7. A threaded connection as defined in Claim 4, wherein:

end surfaces of each of said pin members include an epoxy coating.

8. A threaded connection as defined in Claim 1, wherein said metal-to-metal seal includes a frusto-conical flank seal spaced between said threads and said ends of said pin members.

9. A threaded connection as defined in Claim 8, wherein each of said pin members includes a flank seal surface spaced axially from said end of said pin member.

10. A threaded connection as defined in Claim 1, further comprising:

a thermoplastic seal ring in engagement with said threads on said pin member and said coupling for sealing well fluids within said connection.

11. A threaded connection as defined in Claim 1, wherein:

each of said pin members having a machined cylindrical surface on said outer surface of said pin member and spaced axially from said threads with respect to said end of said pin member, and having a stop surface adjacent said cylindrical surface;

a reinforced torque shoulder ring in engagement with said stop surface and in fixed engagement with said pin member; and

said reinforced torque shoulder ring having a surface adapted for engagement with a mating surface of said coupling for forming a reinforced torque shoulder.

12. A premium thread for coaxially joining pin ends of tubular members having a generally uniform wall thickness, the improvement comprising:

each of said pin members including an upset wall having a thickness more than 140% and less than 175% of said uniform wall thickness;

each of said pin members having a premium thread on its outer surface and a metal-to-metal sealing surface independent of said premium threads;

a coupling having premium threads on its inner surface for mating with said threads on said pin member and having a metal-to-metal sealing surface independent of said premium threads for sealing with said sealing surface on said pin members; and

the thickness between an internal radius of said upset wall and a base of a groove forming the last thread on each of said pin members in threaded engagement with said coupling being equal to or greater than said uniform wall thickness, whereby the strength of said connection is equal to or greater than the strength of said tubular goods.

13. A threaded connection as defined in Claim 12, wherein:

each of said premium threads on said pin members and said coupling are two step threads, with a first threaded portion axially spaced from a second threaded portion and having a substantially different diameter than said first threaded portion; and

each of said pin members and said coupling including a torque shoulder surface axially disposed between said first and second thread portions for forming a torque shoulder; and

an internal diameter of said tubular goods corresponds to an internal diameter of said upset wall.

14. A threaded connection as defined in Claim 12, wherein:

said premium threads of said coupling run out onto said outer wall of said upset pin members; and

an internal diameter of said tubular goods corresponds to an internal diameter of said upset wall.

15. A threaded connection as defined in Claim 13, further comprising:

an elastomeric ring sandwiched between adjacent end surfaces of said pin members; and

said upset wall thickness is less than approximately 160% of said uniform wall thickness.

16. A threaded connection as defined in Claim 15, wherein:

each of said pin members includes a frusto-conical flank seal surface spaced axially from said end of said pin member; and

said flank seal surface cooperates with a corresponding surface on said coupling to form said metal-to-metal seal spaced between said threads and said end of said pin member.

17. A method of forming a premium threaded connection for tubular goods, comprising:

upsetting each pin end of said tubular goods to form an upset end having a wall thickness less than 175% of a uniform wall thickness of said tubular goods;

cutting a premium thread on an outer surface of said upset wall;

forming a separate sealing surface on said outer surface of said upset wall separate from said premium threads for forming a metal-to-metal seal with a coupling;

threading said coupling with an internal mating premium thread on its internal surface and a mating metal-to-metal sealing surface; and

retaining a wall thickness between an internal radius of said upset wall and a base of a groove forming the last thread on said pin member in threaded engagement with said coupling which is greater than said uniform wall thickness, whereby the strength of said connection is equal to or greater than the strength of said tubular goods.

18. The method as defined in Claim 17, further comprising:

forming said metal-to-metal sealing surfaces on said pin end and said coupling axially between a first threaded portion of said premium thread and a second threaded portion of said premium thread axially spaced from said first portion and having a substantially different diameter than said first threaded portion.

19. The method as defined in Claim 17, wherein said premium threads of said coupling are adapted for running out onto said outer wall of said upset pin member.

20. The method as defined in Claim 17, further comprising:

coating end surfaces of each of said pin members with an epoxy coating; and

placing an elastomeric corrosion ring between adjacent end surfaces of said pin members for streamlining fluid flow in said tubular goods.

21. The method as defined in Claim 18, further comprising:

forming a frusto-conical flank seal surface spaced between said threads and an end of said pin member for forming said metal-to-metal seal with said coupling; and

axially spacing the entirety of said flank seal surface from said end surface of said pin member.

22. The method as defined in Claim 18, wherein said upset wall thickness is maintained from approximately 140% to 160% of said uniform wall thickness.

## FIG.1

## FIG.2

## FIG 3

FIG.4

FIG.5

Tt

94

Tu

92

96

FIG.6

Tt

100

Tu

106

108

104

98

102

FIG.7